# EUROPÄISCHE PATENTSCHRIFT

(11) **EP 1 741 573 B1**
(45) Veröffentlichungstag und Bekanntmachung des Hinweises auf die Patenterteilung: **14.11.2007**
(21) Anmeldenummer: 06011168.9
(22) Anmeldetag: 31.05.2006
(51) Int. Cl.: B60D 5/00, B61D 17/22

(54) **Spurfugenabdeckung bei Gelenkfahrzeugen**
Gap cover for articulated vehicles
Couverture du joint pour véhicules articulés

(30) Priorität: 09.07.2005 DE 102005032218
(43) Veröffentlichungstag der Anmeldung: 10.01.2007
(62) Teilanmeldung aus: 06019222.6
(73) Patentinhaber: Hübner GmbH, 34123 Kassel (DE)
(72) Erfinder: Koch, Robert, 37242 Bad Sooden-Allendorf (DE); Mosaner, Knud, 34127 Kassel (DE)
(74) Vertreter: WALTHER, WALTHER & HINZ Patentanwälte - European Patent Attorneys

(56) Entgegenhaltungen:
- EP-A1- 0 215 329
- EP-A1- 0 698 514
- DE-C1- 10 005 994
- DE-U1- 29 921 498

## Beschreibung

Die Erfindung betrifft eine Vorrichtung zum Abdecken der Spurfuge (Spurfugenabdeckung) zwischen dem Drehteller und dem Balg eines Übergangs zwischen zwei gelenkig miteinander verbundenen Fahrzeugteilen, wobei der Balg zwei Seitenwände umfasst, die zumindest durch ein Balgdach miteinander verbunden sind, wobei die Spurfugenabdeckung ähnlich dem Balg des Übergangs einzelne Wellen oder Falten aufweist, wobei benachbarte Wellen oder Falten zumindest im Bereich ihres einen Scheitels durch Klemmleisten miteinander verbunden sind.

Bei Gelenkfahrzeugen, und hier insbesondere bei Gelenkbussen, sind Motorwagen und Nachläufer, also die beiden Fahrzeugteile, durch ein Gelenk miteinander gekuppelt, wobei das Gelenk einen Drehteller, auch Plattform genannt, aufweist. Ein solcher Drehteller ermöglicht zum einen die Möglichkeit des Überwechselns von dem einem Fahrzeugteil zum anderen Fahrzeugteil, bietet aber auch zusätzliche Stehplätze während der Fahrt. Dieser Drehteller samt Gelenk ist von einem Balg, und hier insbesondere von einem Faltenbalg, umgeben, wobei ein solcher Balg üblicherweise zwei Seitenwände umfasst, die zumindest durch ein Balgdach miteinander verbunden sind, wobei zusätzlich noch ein Boden vorgesehen ist, so dass sich eine im Wesentlichen tunnelartige Struktur des Übergangs ergibt.

Zwischen den beiden Seitenwänden und dem Rand des Drehtellers besteht eine sogenannte Spurfuge, d. h. ein Zwischenraum zwischen den beiden Seitenwänden und dem Drehtellerrand, der ein Drehen des Drehtellers im Balg ermöglicht. Um Unfälle durch die Spurfuge zu vermeiden, ist bekannt, diese Spurfuge abzudecken. In diesem Zusammenhang ist aus der EP 0 215 329 B1 eine im Querschnitt kastenförmige Spurfugenabdeckung bekannt, bei der die Spurfugenabdeckung ganz ähnlich der des Überganges aus einzelnen Falten oder Wellen besteht, wobei die einzelnen Falten oder Wellen miteinander durch Klemmleisten verbunden sind, wobei diese Klemmleisten starr an der Seitenwand des Balges angeordnet sind. Die Anordnung oder Befestigung der Klemmleisten der Spurfugenabdeckung an der Balgseitenwand erfolgt hierbei an den jeweiligen Scheiteln der Falten der Seitenwand des Balges, die zu der Spurfugenabdeckung unmittelbar benachbart sind.

Bekanntermaßen muss der Balg beispielsweise eines Gelenkbusses den unterschiedlichsten Fahrbewegungen nachgeben können. Der Balg muss insbesondere in der Lage sein, sämtlichen Wank-, Knick- und Nickbewegungen folgen zu können. Wankbewegungen entstehen, wenn die beiden Fahrzeugteile relativ zueinander um die Längsachse verdreht werden; Nickbewegungen entstehen, wenn der Bus über eine Kuppe oder durch eine Senke fährt, und Knickbewegungen entstehen, wenn der Bus eine Kurve durchfährt. Üblicherweise gibt es auch Überlagerungen der einzelnen Bewegungsarten. Das heißt, dass an den Balg hohe Anforderungen an die Beweglichkeit gestellt werden.

Es hat sich nun allerdings herausgestellt, dass durch die Spurfugenabdeckung die Beweglichkeit des Balges durchaus eingeschränkt ist. Dies insofern, als durch die Spurfugenabdeckung, die eine im Querschnitt kastenförmige Kontur aufweist, der Balg stabilisiert wird, was, wie bereits ausgeführt, die Beweglichkeit des Balges als solchen unter Umständen stark beeinträchtigt. Die Folge hiervon ist, dass das Balgmaterial erheblichen Spannungen ausgesetzt ist, die schlussendlich zu einer Reduzierung der Lebensdauer des Balges insgesamt führen.

Eine gattungsgemäße Spurfugenabdeckung ist in EP 698514 offenbart.

Der Erfindung liegt daher die Aufgabe zugrunde, eine Vorrichtung zur Abdeckung der Spurfuge zwischen dem Drehteller und dem Balg eines Überganges zwischen zwei gelenkig miteinander verbundenen Fahrzeugteilen derart auszubilden, dass die Beweglichkeit des Balges bei allen etwaig auftretenden Fahrbewegungen im Wesentlichen nicht behindert wird.

Die Aufgabe wird erfindungsgemäß dadurch gelöst, dass die Klemmleisten der Spurfugenabdeckung zumindest mit ihrem einen Ende vertikal beweglich an der Seitenwand des Balges befestigt sind. Durch die vertikale Beweglichkeit oder Verschieblichkeit der Spurfugenabdeckung relativ zur Seitenwand des Balges und damit einer im Prinzip schwimmenden Lagerung der Spurfugenabdeckung am Balg wird erreicht, dass die Spurfugenabdeckung sich relativ zum Balg bewegen kann. Das heißt, dass durch die Spurfugenabdeckung die Beweglichkeit des Balges gar nicht oder zumindest nur in einem geringen Maße eingeschränkt ist.

Weitere vorteilhafte Merkmale zu der Erfindung sind den Unteransprüchen zu entnehmen.

So ist nach einem besonderen Merkmal der Erfindung vorgesehen, dass die Klemmleisten an beiden Enden an der Seitenwand des Balges des Überganges vertikal beweglich befestigt sind. Hierdurch wird gewährleistet, dass die Spurfugenabdeckung stabil und sicher die Spurfuge zwischen Drehteller und Balgseitenwand tatsächlich abdeckt.

Im Einzelnen ist des Weiteren vorgesehen, dass die Falten oder Wellen des Balges im Bereich ihres der Spurfugenabdeckung zugewandten Scheitels Hülsen zur beweglichen Aufnahme der Klemmleisten der Spurfugenabdeckung aufweisen. Hieraus wird deutlich, dass die Hülsen, die vorzugsweise im Bereich des durch die Spurfugenabdeckung abgedeckten Teils der Seitenwand des Balges angeordnet sind, um die Befestigung insgesamt vor Vandalismus zu schützen, die Klemmleisten verschieblich aufnehmen.

Hierbei sind die Hülsen vorzugsweise klemmbar mit der Falte oder Welle des Balges verbindbar, um so weit wie möglich eine Beschädigung des Balgmaterials zu verhindern.

In diesem Zusammenhang ist vorgesehen, dass die Wellen oder Falten im Bereich ihres Scheitels ein Einfasselement, beispielsweise in Form eines U-förmig gebogenen Einfassbandes, aufweisen, das mit den Bahnen der Wellen oder Falten im Scheitel verklebt und/oder vernäht ist. Durch ein solches Einfassband wird somit bei Befestigung der Hülse an der Falte oder Welle eine Beschädigung des Falten- oder Wellenbalgmateriales verhindert.

Die Einsteckbarkeit der Klemmleisten in die Hülsen erfolgt von oben, so dass aufgrund des Eigengewichtes der Spurfugenabdeckung die Spurfugenabdeckung selbst immer in ihre Ausgangslage zurückgelangt.

Nach einem weiteren Merkmal der Erfindung ist die Spurfugenabdeckung an einem Endrahmen eines jeden Fahrzeugteiles befestigt. Hierzu ist im Einzelnen vorgesehen, dass die dem Endrahmen benachbarte Falten- oder Wellenbahn einer Falte oder Welle von einem Kederprofil klemmend erfasst wird, wobei das Kederprofil von dem Endrahmen aufnehmbar ist. Im Gegensatz zu der beweglichen Anbindung der Klemmleisten der Spurfugenabdeckung an der Seitenwand des Balges erfolgt die Verbindung mit dem Endrahmen des jeweiligen Fahrzeugteiles im Wesentlichen starr. Dies deshalb, um zu verhindern, dass die Spurfugenabdeckung insgesamt aus den Hülsen entnommen werden kann.

Bei längeren Bälgen ist ein sogenannter Mittelrahmen vorgesehen, durch den der Balg in zwei Hälften unterteilt ist. Im Bereich des Mittelrahmens sind die beiden Balghälften durch den Mittelrahmen miteinander verbunden. In diesem Zusammenhang ist vorgesehen, dass der Mittelrahmen einen in etwa entsprechend der Kontur der Spurfugenabdeckung ausgebildeten Bügel aufweist, wobei die Spurfugenabdeckung mit dem Bügel des Mittelrahmens verbindbar ist. Der Bügel selbst ist hierbei als gebogenes, insbesondere mit einer offenen Kontur versehenes Teil ausgebildet, wobei die Enden des Bügels an dem Mittelrahmen angeordnet sind. Durch diese offene, kastenartige Struktur des Bügels wird erreicht, dass der Bügel im gewissen Umfang vertikalfedernd beweglich ist. Ähnlich wie bei der Anlenkung der Spurfugenabdeckung an dem Endrahmen des Fahrzeugchassis ist auch hier die Anbindung der Spurfugenabdeckung an dem Bügel des Mittelrahmens starr, um ein Herausnehmen der Spurfugenabdeckung aus den Hülsen zu verhindern. Dennoch wird durch die Beweglichkeit des Bügels in vertikaler Richtung der Tatsache Rechnung getragen, dass durch die Spurfugenabdeckung die Beweglichkeit des Balges als solchem nicht oder nicht wesentlich behindert sein soll. Zur Verbindung der zu dem Bügel benachbarten Falten- oder Wellenbahn einer Falte oder Welle ist wiederum ein Kederprofil vorgesehen, das die Falten- oder Wellenbahn über ihre Länge klemmend erfasst, wobei das Kederprofil von dem Bügel aufnehmbar ist. Der Bügel weist darüber hinaus nach einem weiteren Merkmal der Erfindung eine der Kontur der Spurfugenabdeckung entsprechende Rückenleiste auf, durch die das Kederprofil aufnehmbar ist.

Gegenstand der Erfindung ist auch die Anordnung einer Balgdecke im Bereich des Balgdaches. Im Einzelnen ist vorgesehen, dass der Balg zur Bildung eines Hohlraumes beabstandet zum Balgdach eine Balgdecke aufweist, wobei auch die Balgdecke mehrere Wellen oder Falten umfasst, die im Bereich ihres Scheitels durch Klemmleisten verbunden sind, wobei die Klemmleisten durch an der Balgseitenwand des Übergangs angeordnete Hülsen steckbar aufnehmbar sind. D. h., dass die Konstruktion der Anbindung der Balgdecke an der Balgseitenwand ganz ähnlich getroffen ist wie die Konstruktion der Anbindung der Spurfugenabdeckung an der Balgseitenwand. Auch hier ist vorgesehen, dass die Hülsen zur Aufnahme der Klemmleisten an dem der Balgdecke zugewandten Scheitel der Balgseitenwand angeordnet sind. Da die Balgdecke im Wesentlichen unmittelbar unter dem Balgdach verlaufend angeordnet ist und somit die Balgdecke die Balgseitenwand nur geringfügig aussteift, ist hierdurch auch nur eine geringe Einschränkung der Beweglichkeit des Balges zu befürchten, so dass nach einem weiteren Merkmal der Erfindung vorgesehen sein kann, die Klemmleisten in der Hülse, beispielsweise durch Schrauben, zu fixieren.

Anhand der Zeichnungen wird die Erfindung nachstehend beispielhaft näher erläutert.
- Fig. 1: zeigt perspektivisch eine Ansicht von innen auf einen Übergang mit einem Mittelrahmen;
- Fig. 2: zeigt als Explosionszeichnung einen Teil des Mittelrahmens eines Überganges, wobei zu beiden Seiten des Mittelrahmens eine Spurfugenabdeckung sowie angedeutet die Endrahmen zur Befestigung an den jeweiligen Fahrzeugteilen erkennbar sind, wobei der Balg weggelassen ist;
- Fig. 2a: zeigt die Einzelheit der Anbindung der Falte der Spurfugenabdeckung an den Bügel des Mittelrahmens;
- Fig. 2b: zeigt die Einzelheit der Anbindung der Falte der Spurfugenabdeckung an den Endrahmen am jeweiligen Fahrzeugteil;
- Fig. 3: zeigt einen Teil des Balges zwischen Endrahmen und Mittelrahmen, wobei aus dieser Darstellung die Anbindung der Spurfugenabdeckung an dem Balg erkennbar wird;
- Fig. 3a: zeigt als Einzelheit die obere Anbindung der Klemmleiste an die Seitenwand des Balges;
- Fig. 3aa: zeigt die Hülse, Klemmleiste und Falte der Balgseitenwand in der Darstellung gemäß Fig. 3a als Einzelteile;
- Fig. 3b: zeigt als Einzelheit die untere Anbindung der Klemmleiste an die Seitenwand des Balges;
- Fig. 3bb: zeigt die Hülse, Klemmleiste und Falte der Balgseitenwand in der Darstellung gemäß Fig. 3b als Einzelteile;
- Fig. 3c: zeigt als Einzelheit die Anbindung der Balgdecke an die Seitenwand des Balges;

- Fig. 3cc: zeigt die Hülse, die Klemmleiste und die Falte der Balgseitenwand in der Darstellung gemäß Fig. 3c als Einzelteile.

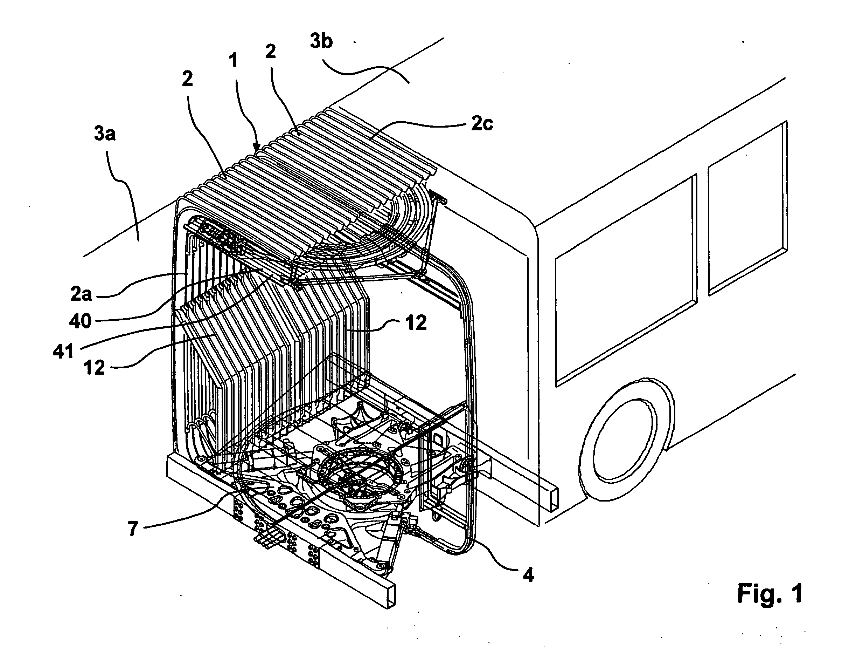

Gemäß Fig. 1 ist der Übergang insgesamt mit 1 bezeichnet. Der Übergang setzt sich zusammen aus den beiden identischen Balghälften 2, die durch den Mittelrahmen 4 miteinander verbunden sind. Endseitig sind die Balghälften an den Fahrzeugteilen 3a, 3b befestigt. Im Bereich der beiden Balghälften 2 befinden sich die beiden Spurfugenabdeckungen 12, die die Spurfuge zwischen Balgseitenwand 2a und dem Drehteller bzw. der Plattform 7 abdecken. Eine solche Spurfuge befindet sich auf jeder Seite des Balges. Unterhalb der Plattform 7 liegt das Gelenk 8. Der Balg mit den Balghälften 2 ist entsprechend der stirnseitigen Kontur der Fahrzeugteile getroffen und umgibt von unten auch das Gelenk. Der Balg ist demzufolge im Querschnitt kastenartig ausgebildet. Unterhalb des Balgdaches 2 befindet sich beabstandet dazu die Balgdecke, die die unter dem Balgdach geführte Kabelführung abdeckt.

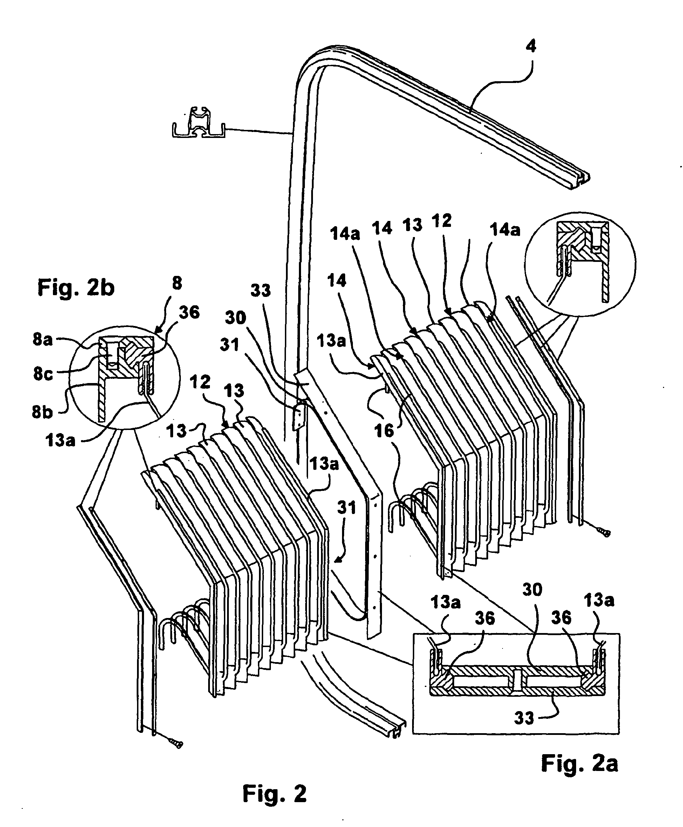

Gegenstand der Erfindung ist die Anbindung der Spurfugenabdeckung 12 an der jeweiligen Balgseitenwand 2a. In diesem Zusammenhang wird auf die Fig. 2 und 3ff verwiesen. Die Spurfugenabdeckung 12 besteht aus einzelnen Falten 13, wobei die Faltenbahnen im Bereich des Faltengrundes 14 miteinander verbunden sind und im Bereich des Faltenscheitels 14a durch eine sogenannte Klemmleiste 16 gehalten werden. Diese Klemmleiste 16 erfasst - wie bereits ausgeführt - am Scheitel die Faltenbahnen zweier benachbarter Falten 13. Sowohl im Bereich des oberen als auch im Bereich des unteren Endes der Spurfugenabdeckung 12 wird die Klemmleiste 16 zwischen zwei Falten auf das Innere der Spurfugenabdeckung zu abgewinkelt. Hierbei ist die Klemmleiste 16 im unteren Bereich der Spurfugenabdeckung 12 nach innen hakenförmig verlaufend ausgebildet, um in gleicher Höhe zu enden wie das obere abgewinkelte Ende der Klemmleiste 16 der Spurfugenabdeckung 12.

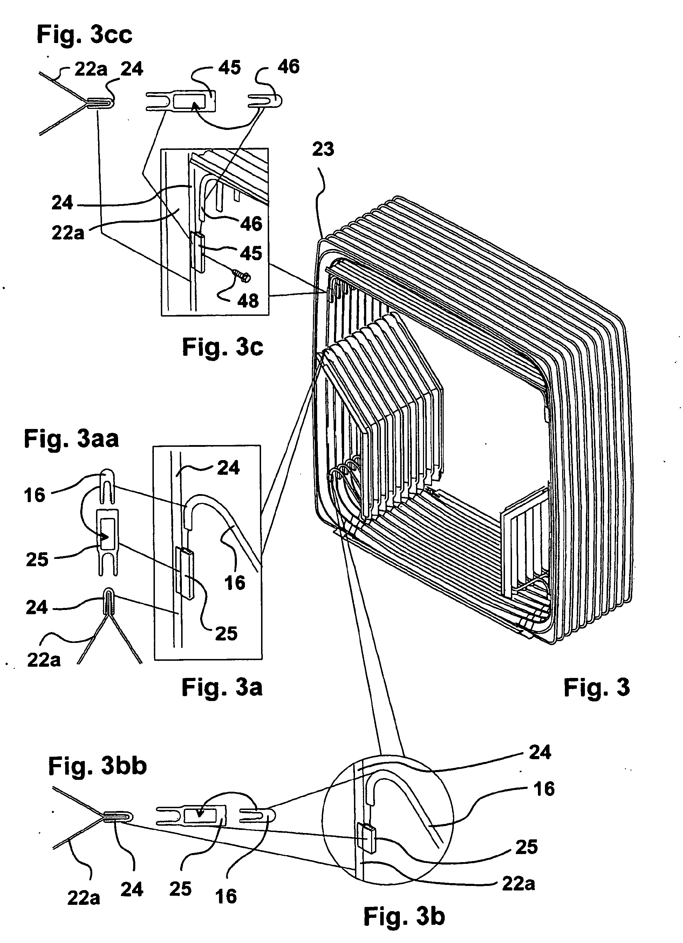

Betrachtet man nunmehr die Fig. 3, so ergibt sich die Befestigung der Spurfugenabdeckung 12 mit Hilfe der nach innen abgewinkelten Klemmleisten 16 an der Balgseitenwand 2a. Hierbei wird im Einzelnen auf die Einzelheiten gem. Fig. 3a und Fig. 3b mit der jeweils explosionsartigen Darstellung der Einzelteile gem. den Fig. 3aa und 3bb verwiesen. Die Seitenwand des Balges ist mit 2a gekennzeichnet. Die Seitenwand 2a weist mehrere Falten 22a auf, die untereinander außen durch Einfassrahmen 23 verbunden sind und innen, d. h. auf den Innenraum des Übergangs zu, durch ein Einfassband 24, wie sich dies aus Fig. 3aa ergibt, verbunden sind. Auf das Einfassband aufgeklemmt ist die Hülse 25, wobei in die Hülse 25 einführbar ist die Klemmleiste 16.

Eine ähnliche Ausgestaltung ergibt sich in Bezug auf die untere Anbindung der Spurfugenabdeckung 12 an die Balgseitenwand 2a bei Betrachtung der Fig. 3b und 3bb. Für die gleichen Teile dieser beiden Fig. 3b und 3bb wurden die gleichen Bezugszeichen verwendet wie in den Fig. 3a und 3aa.

Für die Anbindung der Spurfugenabdeckung 12 sowohl an den Mittelrahmen 4 als auch an die Endrahmen 8, die sich an den jeweiligen Fahrzeugteilen 3a, 3b befinden, wird wiederum auf die Fig. 2 bzw. 2a und 2b verwiesen. Betrachtet man in diesem Zusammenhang zunächst einmal die Anbindung der Spurfugenabdeckung 12 an den Mittelrahmen 4, so ergibt sich in Verbindung mit Fig. 2a Folgendes:

Der Mittelrahmen 4 weist im Bereich der Spurfugenabdeckung 12 den kastenförmig gebogenen Bügel 30 auf. Der kastenförmig gebogene Bügel 30 weist zwei zueinander fluchtende Enden 31 auf, die mit dem Mittelrahmen verschraubt sind. Auf der Rückseite des Bügels befindet sich die Rückenleiste 33, die entsprechend der Kontur der Spurfugenabdeckung 12 getroffen ist. Die Spurfugenabdeckung 12 weist benachbart zu dem

Bügel 30 bzw. der Rückenleiste 33 eine offene Faltenbalgbahn 13a auf. Diese offene Faltenbahn 13a wird durch das Kederprofil 36 klemmend erfasst, wobei dieses Kederprofil 36 durch die Rückenleiste 33 in Verbindung mit dem Bügel aufgenommen wird, wie sich dies aus Fig. 2a ergibt.

In Bezug auf die Anbindung des Endes der Spurfugenabdeckung 12 an den Endrahmen 8 des Wagenkastens wird auf die Fig. 2b verwiesen. Der insgesamt mit 8 bezeichnete Endrahmen besteht aus zwei Rahmenteilen 8a, 8b, die durch die Schrauben 8c miteinander verschraubbar sind. Auch hier besitzt die Spurfugenabdeckung 12 im Bereich des Übergangs zum Wangenkasten bzw. zum Endrahmen 8 eine offene Faltenbahn 13a, die von dem Kederprofil 36 wiederum klemmend erfasst wird, wie dies bereits aus der Beschreibung zu Fig. 2a bekannt ist. Dieses Kederprofil 36 wird durch den Endrahmen 8 aufgenommen.

Gegenstand der Erfindung ist ebenfalls die Anbindung der Balgdecke 40, beabstandet zum Balgdach 2c an den Balgseitenwänden 2a. Die Balgdecke 40 umfasst ganz ähnlich wie der Balg selbst einzelne Falten 41, die wiederum durch Klemmleisten 46 gehalten sind. Diese Klemmleisten 46 sind endseitig in Richtung auf die Balgseitenwand 2a zu abgebogen und laufen dort in Klemmhülsen 45 ein, wie sich dies aus der Fig. 3c mit der explosionsartigen Darstellung gemäß Fig. 3cc ergibt. Vorgesehen ist hierbei, dass die Klemmleisten 46 der Balgdecke 40 durch Schrauben 48 in der Hülse 45 fixiert werden können.

Es ist unmittelbar einsichtig, dass bei Bewegung des Balges bzw. bei Bewegung der Balghälften die Spurfugenabdeckung bzw. die beiden Spurfugenabdeckungen sich relativ zu dem Balg bzw. der Balgseitenwand bewegen können und hierdurch die Beweglichkeit des Balges, wenn überhaupt, nur in einem geringen Maße eingeschränkt ist.

## Patentansprüche

1. Vorrichtung (12) zum Abdecken der Spurfuge zwischen dem Drehteller (7) und dem Balg des Übergangs (1) zwischen zwei gelenkig miteinander verbundenen Fahrzeugteilen (3a, 3b), wobei der Balg zwei Seitenwände (2a) umfasst, die zumindest durch ein Balgdach (2c) miteinander verbunden sind, wobei die Spurfugenabdeckung (12) ähnlich dem Balg des Übergangs (1) einzelne Wellen oder Falten (13) aufweist, wobei benachbarte Wellen oder Falten (13) zumindest im Bereich ihres einen Scheitels durch Klemmleisten (16) miteinander verbunden sind,
**dadurch gekennzeichnet,**
**dass** die Klemmleisten (16) zumindest mit ihrem einen Ende vertikal beweglich an der Seitenwand (2a) des Balges (2) befestigt sind.

2. Vorrichtung nach Anspruch 1,
**dadurch gekennzeichnet,**
**dass** die Klemmleisten (16) an beiden Enden an der Seitenwand (2a) des Balges (2) des Übergangs (1) vertikal beweglich befestigt sind.

3. Vorrichtung nach Anspruch 1,
**dadurch gekennzeichnet,**
**dass** die Falten (13) oder Wellen des Balges (2) im Bereich ihres der Spurfugenabdeckung (12) zugewandten Scheitels Hülsen (25) zur beweglichen Aufnahme der Klemmleisten (16) der Spurfugenabdeckung (12) aufweisen.

4. Vorrichtung nach Anspruch 3,
**dadurch gekennzeichnet,**
**dass** die Hülsen (25) im Bereich des durch die Spurfugenabdeckung (12) abgedeckten Teils der Seitenwand (2a) des Balges (2) angeordnet sind.

5. Vorrichtung nach Anspruch 3,
**dadurch gekennzeichnet,**
die Hülsen (25) klemmbar mit der Falte (13) oder Welle des Balges (2) verbindbar sind.

6. Vorrichtung nach Anspruch 3,
**dadurch gekennzeichnet,**
**dass** die Klemmleisten (16) von oben in die Hülsen (25) einsteckbar sind.

7. Vorrichtung nach Anspruch 1
**dadurch gekennzeichnet,**
**dass** die Wellen oder Falten (13) im Bereich ihres Scheitels ein Einfasselement (24) aufweisen.

8. Vorrichtung nach Anspruch 7,
**dadurch gekennzeichnet,**
**dass** das Einfasselement (24) ein U-förmig gebogenes Einfassband ist, das mit den Bahnen (13a) oder Wellen der Falten (13) verklebt und/oder vernäht ist.

9. Vorrichtung nach Anspruch 1
**dadurch gekennzeichnet,**
**dass** die Spurfugenabdeckung (12) an einem Endrahmen (8) eines Fahrzeugsteils (3a, 3b) befestigt ist.

10. Vorrichtung nach Anspruch 9,
**dadurch gekennzeichnet,**
**dass** die dem Endrahmen (8) benachbarte Falten- oder Wellenbahn (13a) von einem Kederprofil (36) klemmend erfasst wird, wobei das Kederprofil (36) von dem Endrahmen (8) aufnehmbar ist.

11. Vorrichtung nach Anspruch 1
**dadurch gekennzeichnet,**
**dass** der Balg (2) einen Mittelrahmen (4) aufweist.

12. Vorrichtung nach Anspruch 11,
**dadurch gekennzeichnet,**
**dass** der Mittelrahmen (4) einen in etwa entsprechend der Kontur der Spurfugenabdeckung (12) ausgebildeten Bügel (30) aufweist, wobei die Spurfugenabdeckung (12) mit dem Bügel (30) des Mittelrahmens (4) verbunden ist. ,

13. Vorrichtung nach Anspruch 12,
**dadurch gekennzeichnet,**
**dass** der Bügel (30) als gebogenes Teil ausgebildet ist.

14. Vorrichtung nach Anspruch 13,
**dadurch gekennzeichnet,**
**dass** der Bügel (30) eine offene Kontur aufweist, wobei die Enden (31) des Bügels (30) an den Mittelrahmen (4) angebracht sind.

15. Vorrichtung nach Anspruch 12,
**dadurch gekennzeichnet,**
**dass** die dem Bügel (30) benachbarte Falten- oder Wellenbahn (13a) von einem Kederprofil (36) klemmend erfassbar ist, wobei das Kederprofil (36) von dem Bügel (30) aufnehmbar ist.

16. Vorrichtung nach einem oder mehreren der voranstehenden Ansprüche,
**dadurch gekennzeichnet,**
**dass** der Bügel (30) eine der Kontur der Spurfugenabdeckung (12) entsprechende Rückenleiste (33) aufweist, durch die das Kederprofil (36) aufnehmbar ist.

17. Vorrichtung nach Anspruch 1,
**dadurch gekennzeichnet,**
**dass** der Balg (2) zur Bildung eines Hohlraumes beabstandet zum Balgdach (2c) eine Balgdecke (40) aufweist, umfassend mehrere Wellen oder Falten, die im Bereich ihres Scheitels durch Klemmleisten (46) verbunden sind, wobei die Klemmleisten (46) durch an der Balgsseitenwand (2a) des Übergangs (1) angeordnete Hülsen (45) steckbar aufnehmbar sind.

18. Vorrichtung nach Anspruch 17,
**dadurch gekennzeichnet,**
**dass** die Hülsen (45) zur Aufnahme der Klemmleisten (46) an dem der Balgdecke (40) zugewandten Scheitel der Balgseitenwand (2a) angeordnet sind.

19. Vorrichtung nach Anspruch 17,
**dadurch gekennzeichnet,**
**dass** die Klemmleisten (46) in der Hülse (45) fixierbar sind.

## Claims

1. An apparatus (12) for covering the track joint between the rotary plate (7) and the bellows of the connection (1) between two hinge-linked vehicle sections (3a, 3b), said bellows comprising two side walls (2a) that are joined together through a bellows roof (2c) at least, said track joint cover (12) having, like the bellows of said connection (1), singular corrugations or pleats (13), neighboring corrugations or pleats (13) being joined together by clamping ledges (16) in the region of their one apex at least,
**characterized in**
**that** the clamping ledges (16) are fastened at their one end at least to the side wall (2a) of the bellows (2) so as to be vertically movable.

2. The apparatus as set forth in claim 1,
**characterized in**
**that** the clamping ledges (16) are fastened at either end to the side wall (2a) of the bellows (2) of the connection (1) so as to be vertically movable.

3. The apparatus as set forth in claim 1,
**characterized in**
**that**, in the region of their apex turned toward the track joint cover (12), the pleats (13) or corrugations of the bellows (2) have sheaths (25) for movably receiving the clamping ledges (16) of the track joint cover (12).

4. The apparatus as set forth in claim 3,
**characterized in**
**that** the sheaths (25) are disposed in the region of the portion of the side wall (2a) of the bellows (2) that is covered by the track joint cover (12).

5. The apparatus as set forth in claim 3,
**characterized in**
**that** the sheaths (25) are clampingly connectable to the pleat (13) or corrugation of the bellows (2).

6. The apparatus as set forth in claim 3,
**characterized in**
**that** the clamping ledges (16) are pluggable into the sheaths (25) from the top.

7. The apparatus as set forth in claim 1,
**characterized in**
**that** the corrugations or pleats (13) have an edging element (24) in the region of their apex.

8. The apparatus as set forth in claim 7,
**characterized in**
**that** the edging element (24) is an edging tape that is bent in a U shape and is glued and/or sewn to the webs (13a) of the corrugations or pleats (13).

9. The apparatus as set forth in claim 1,
**characterized in**
**that** the track joint cover (12) is fastened to an end frame (8) of a vehicle section (3a, 3b).

10. The apparatus as set forth in claim 9,
**characterized in**
**that** a strip profile (36) clampingly engages the pleat or corrugation web (13a) neighboring the end frame (8), said strip profile (36) being receivable by the end frame (8).

11. The apparatus as set forth in claim 1,
**characterized in**
**that** the bellows (2) has a central frame (4).

12. The apparatus as set forth in claim 11,
**characterized in**
**that** the central frame (4) has a bar (30) configured to approximately mate with the contour of the track joint cover (12), said track joint cover (12) being connected to said bar (30) of said central frame (4).

13. The apparatus as set forth in claim 12,
**characterized in**
**that** the bar (30) is configured to be a bent part.

14. The apparatus as set forth in claim 13,
**characterized in**
**that** the bar (30) has an open contour, the ends (31) of said bar (30) being attached to the central frame (4).

15. The apparatus as set forth in claim 12,
**characterized in**
**that** the pleat or corrugation web (13a) neighboring the bar (30) is clampingly receivable by a strip profile (36), said strip profile (36) being receivable by said bar (30).

16. The apparatus as set forth in claim 12,
**characterized in**
**that** the bar (30) has a back ledge (33) that mates with the contour of the track joint cover (12), the strip profile (36) being receivable by said back ledge (33).

17. The apparatus as set forth in claim 1,
**characterized in**
**that** the bellows (2) has a bellows ceiling portion (40) which is spaced from the bellows roof (2c) to form a cavity, said bellows ceiling portion also comprising a plurality of corrugations or pleats that are joined by clamping ledges (46) in their apex region, said clamping ledges (46) being pluggably receivable by sheaths (45) disposed on the bellows side wall (2a) of the connection (1).

18. The apparatus as set forth in claim 17,
**characterized in**
**that** the sheaths (45) for receiving the clamping ledges (46) are disposed on the apex of the bellows side wall (2a) that is turned toward the bellows ceiling portion (40).

19. The apparatus as set forth in claim 17,
**characterized in**
**that** the clamping ledges (46) are securable in the sheath (45).

## Revendications

1. Dispositif (12) de recouvrement du joint entre le plateau tournant (7) et le soufflet d'une intercirculation (1) entre deux parties (3a, 3b) de véhicule articulées, le soufflet comprenant deux parois latérales (2a) reliées ensemble par un toit de soufflet (2c) au moins, le couvre-joint (12) comportant, de manière analogue au soufflet de l'intercirculation (1), des ondulations ou des plis (13) distincts, les ondulations ou plis (13) voisins étant reliés ensemble, à la hauteur de leur arête au moins, par des baguettes de serrage (16),
**caractérisé en ce**
**que** les baguettes de serrage (16) sont fixées, mobiles verticalement, par une au moins de leurs extrémités, sur la paroi latérale (2a) du soufflet (2).

2. Dispositif selon la revendication 1,
**caractérisé en ce**
**que** les baguettes de serrage (16) sont fixées, mobiles verticalement, par leurs deux extrémités sur la paroi latérale (2a) du soufflet (2) de l'intercirculation (1).

3. Dispositif selon la revendication 1,
**caractérisé en ce**
**que** les plis (13) ou ondulations du soufflet (2) comportent, à la hauteur de leur arête tournée vers le couvre-joint (12), des gaines (25) destinées à recevoir de façon mobile les baguettes de serrage (16) du couvre-joint (12).

4. Dispositif selon la revendication 3,
**caractérisé en ce**
**que** les gaines (25) sont disposées à la hauteur de la partie de la paroi latérale (2a) du soufflet (2) qui est recouverte par le couvre-joint (12).

5. Dispositif selon la revendication 3,
**caractérisé en ce**
**que** les gaines (25) sont aptes à être reliées par serrage au pli (13) ou à l'ondulation du soufflet (2).

6. Dispositif selon la revendication 3,
**caractérisé en ce**
**que** les baguettes de serrage (16) sont aptes à être introduites par le haut dans les gaines (25).

7. Dispositif selon la revendication 1,
**caractérisé en ce**
**que** les ondulations ou plis (13) comportent un élément de bordure (24) à la hauteur de leur arête.

8. Dispositif selon la revendication 7,
**caractérisé en ce**
**que** l'élément de bordure (24) est une bande de bordure recourbée en U qui est collée et/ou cousue sur les bandes (13a) ou ondulations des plis (13).

9. Dispositif selon la revendication 1,
**caractérisé en ce**
**que** le couvre-joint (12) est fixé à un cadre d'extrémité (8) d'une partie de véhicule (3a, 3b).

10. Dispositif selon la revendication 9,
**caractérisé en ce**
**que** la bande (13a) formant pli ou ondulation voisine du cadre d'extrémité (8) est saisie par serrage par un profilé de bordure (36), le profilé de bordure (36) étant apte à être reçu par le cadre d'extrémité (8).

11. Dispositif selon la revendication 1,
**caractérisé en ce**
**que** le soufflet (2) comporte un cadre central (4).

12. Dispositif selon la revendication 11,
**caractérisé en ce**
**que** le cadre central (4) comporte un arceau (30) épousant approximativement le contour du couvre-joint (12), ce couvre-joint (12) étant relié à l'arceau (30) du cadre central (4).

13. Dispositif selon la revendication 12,
**caractérisé en ce**
**que** l'arceau (30) est conformé en forme de pièce courbe.

14. Dispositif selon la revendication 13,
**caractérisé en ce**
**que** l'arceau (30) comporte un contour ouvert, les extrémités (31) de l'arceau (30) étant montées sur le cadre central (4).

15. Dispositif selon la revendication 12,
**caractérisé en ce**
**que** la bande (13a) formant pli ou ondulation voisine de l'arceau (30) est saisie par serrage par un profilé de bordure (36), ce profilé de bordure (36) étant reçu par l'arceau (30).

16. Dispositif selon une ou plusieurs des revendications précédentes,
**caractérisé en ce**
**que** l'arceau (30) comporte une baguette arrière (33) épousant le contour du couvre-joint (12) et recevant le profilé de bordure (36).

17. Dispositif selon la revendication 1,
**caractérisé en ce**
**que**, pour former un espace vide, le soufflet (2) comporte à distance du toit (2c) du soufflet un plafond (40), ce plafond du soufflet comprenant plusieurs ondulations ou plis qui sont reliés par des baguettes de serrage (46) à la hauteur de leur arête, les baguettes de serrage (46) étant aptes à être reçues par enfichage dans des gaines (45) disposées sur la paroi latérale (2a) du soufflet de l'intercirculation (1).

18. Dispositif selon la revendication 17,
**caractérisé en ce**
**que** les gaines (45) destinées à recevoir les baguettes de serrage (46) sont disposées sur l'arête de la paroi latérale (2a) du soufflet qui est tournée vers le plafond (40) du soufflet.

19. Dispositif selon la revendication 17,
**caractérisé en ce**
**que** les baguettes de serrage (46) sont aptes à être fixées dans la gaine (45).
